# EUROPÄISCHE PATENTANMELDUNG

(11) **EP 1 066 947 A2**
(43) Veröffentlichungstag der Anmeldung: **10.01.2001**
(21) Anmeldenummer: 00113510.2
(22) Anmeldetag: 26.06.2000
(51) Int. Cl.: B29C 45/42

(54) **Temperierverfahren sowie Kunststoff-Spritzgiessmaschine mit einem Handlingsystem**

(30) Priorität: 30.06.1999 DE 19929989; 29.12.1999 DE 19963573
(71) Anmelder: HEKUMA Herbst Maschinenbau GmbH, 85386 Eching (DE)
(72) Erfinder: Herbst, Richard, 85386 Eching (DE)
(74) Vertreter: Witte, Alexander, Dr.-Ing.

(57) **Zusammenfassung**

Ein Temperierverfahren dient zum Einsatz bei einer Kunststoff-Spritzgießmaschine. Diese umfaßt ein Handlingsystem (40) zur Entnahme eines Werkstücks (18) aus einem Formhohlraum (16) in einer Formhälfte (12, 14) eines Formwerkzeugs (10). In das Handlingsystem (40) ist eine Temperiervorrichtung integriert. Die Temperiervorrichtung ist als mindestens eine Düse (50, 52) für ein Temperiermedium ausgebildet.

## Beschreibung

Die Erfindung betrifft ein Temperierverfahren zum Einsatz bei einer Kunststoff-Spritzgießmaschine mit einem Handlingsystem zur Entnahme eines Werkstücks aus einem Formhohlraum in einer Formhälfte eines Formwerkzeugs und mit einer in das Handlingsystem ingetrierten Temperiervorrichtung.

Die Erfindung betrifft ferner eine Kunststoff-Spritzgießmaschine mit einem Handlingsystem zur Entnahme eines Werkstücks aus einem Formhohlraum in einer Formhälfte eines Formwerkzeugs und mit einer in das Handlingsystem integrierten Temperiervorrichtung.

Aus der DE 94 02 931 U ist eine Vorrichtung zur Entnahme von Spritzgußteilen aus einem Spritzgußwerkzeug bekannt. Die bekannte Vorrichtung umfaßt eine Entnahmehand, die im geöffneten Zustand eines Formwerkzeugs zwischen die beiden Werkzeughälften einfahrbar ist, um das soeben hergestellte Kunststoff-Werkstück zu entnehmen. Die Entnahmehand weist eine Greiferplatte auf, mit der die Werkstücke über Sauggreifer aus dem Formhohlraum entnommen werden. Bei der bekannten Vorrichtung sind die Kunststoff-Werkstücke sehr dünnwandig ausgebildet (CD-Boxen) und werden während der Entnahme aus dem Formhohlraum dadurch abgekühlt, daß sie an die Greiferplatte der Entnahmehand angelegt werden. Zur Unterstützung der Kühlwirkung kann die Greiferplatte bei der bekannten Vorrichtung mit einer Kühleinrichtung versehen sein. Die Kühleinrichtung besteht vorzugsweise aus Kühlbohrungen, die von einem Kühlmedium durchflossen werden.

Die bekannte Vorrichtung hat den Nachteil, daß sie bauartbedingt nur für dünnwandige Kunststoff-Werkstücke geeignet ist, jedenfalls nur für solche Werkstücke, die einen relativ großen und flachen Oberflächenabschnitt aufweisen, mit dem sie an eine Greiferplatte angelegt werden können, um im Wege der Kontaktkühlung abgekühlt zu werden.

Kunststoff-Werkstücke weisen diese Eigenschaft jedoch nur in Ausnahmefällen auf. Üblicherweise sind Kunststoff-Werkstücke beliebig geformt und haben üblicherweise keine großen ebenen Oberflächenabschnitte. Darüber hinaus ist die bekannte Vorrichtung nicht bei solchen Formwerkzeugen einsetzbar, bei denen Kerne vorgesehen sind und gekühlt werden sollen, die im geschlossenen Zustand des Formwerkzeugs in den Formhohlraum hineinragen und dort beispielsweise Durchgangsbohrungen oder dergleichen im fertigen Werkstück erzeugen.

Aus der DE 195 36 868 A1 sind ein Verfahren und eine Vorrichtung zum Entnehmen von spritzgegossenen Kunststofferzeugnissen aus einem Werkzeug einer Kunststoff-Spritzgießmaschine bekannt.

Auch diese bekannte Vorrichtung dient zum Herstellen von flachen, dünnwandigen Kunststofferzeugnissen, vorzugsweise CD-Boxen.

Die Werkstücke werden mittels eines Greifarms aus dem Formwerkzeug entnommen und unmittelbar nach der Entnahme mittels eines Kühlmediums gekühlt. Vorzugsweise werden die Werkstücke mit geringfügigem Abstand voneinander und parallel zueinander auf einem Förderband angeordnet. Als Förderband dienen beispielsweise zwei parallel zueinander laufende Zahnriemen, wobei die Werkstücke in die Lücken der Zähne eingesetzt werden. Um die Werkstücke zu kühlen, wird der Gesamtbereich des Förderbandes mit einem Kühl-Luftstrom beaufschlagt, wobei der Luftstrom durch die Zwischenräume zwischen den nebeneinander angeordneten Werkstücken geleitet wird. Bei dieser bekannten Vorrichtung wird daher statt einer Kontaktkühlung eine Konvektionskühlung verwendet.

Nachteil dieser bekannten Vorrichtung ist, daß die Werkstücke zunächst aus dem Formhohlraum entnommen und dann zu dem Förderband überführt werden müssen. Die Kühlwirkung tritt daher zwar kurzzeitig nach der Entnahme aus dem Formhohlraum ein, jedoch nicht ganz unmittelbar nach oder bereits während oder sogar noch vor der Entnahme, so daß darauf geachtet werden muß, das noch relativ weiche Kunststoff-Werkstück während des Überführens aus dem Formhohlraum auf das Förderband entsprechend stabil zu halten und unbeabsichtigte Verformungen des Werkstücks zu vermeiden.

Ein weiterer Nachteil der bekannten Vorrichtung besteht darin, daß ausschließlich eine Kühlung der Werkstücke möglich ist, nicht jedoch eine Kühlung der bereits weiter oben erwähnte Kerne in etwas komplizierteren Formwerkzeugen.

Schließlich ist aus der US 4 636 341 A noch bekannt, spritzgegossene Kunststoffartikel nach der Entformung aus dem Formwerkzeug mittels eines Förderbandes in eine Kühlstation zu überführen, in der sie unter Vibration auf einem Lochblech entlang gefördert werden, das von unten von einem Kühl-Luftstrom durchströmt wird.

Auch diese bekannte Vorrichtung hat damit den Nachteil, daß die Kunststoff-Werkstücke nicht bereits während und unmittelbar nach der Entnahme gekühlt werden, sondern vielmehr zunächst eine Überführung zu einer speziellen Kühlstation notwendig ist. Auch dabei werden ausschließlich die Werkstücke, nicht jedoch Komponenten des Formwerkzeugs, gekühlt.

Der Erfindung liegt demgegenüber die Aufgabe zugrunde, eine Vorrichtung der eingangs genannten Art dahingehend weiterzubilden, daß die obengenannten Nachteile vermieden werden. Insbesondere soll es möglich sein, Kunststoff-Werkstücke beliebiger Formgebung bereits während oder unmittelbar nach oder sogar schon vor der Entformung effektiv zu temperieren. Dabei soll vermieden werden, daß die Werkstücke zunächst in eine separate Temperier-, z.B. eine Kühlstation überführt werden müssen. Darüber hinaus soll auch eine Temperierung von Komponenten des Formwerkzeugs selbst möglich sein, die ebenfalls bereits bei oder unmittelbar nach oder sogar schon vor der Entnahme der Werkstücke aus dem Formhohlraum wirksam wird.

Bei einem Verfahren der eingangs genannten Art wird diese Aufgabe erfindungsgemäß dadurch gelöst, daß mittels der Temperiervorrichtung eine Heizwirkung erzielt wird.

Bei einer Kunststoff-Spritzgießmaschine der eingangs genannten Art wird diese Aufgabe erfindungsgemäß dadurch gelöst, daß die Temperiervorrichtung als mindestens eine Düse für ein Temperiermedium ausgebildet ist.

Die der Erfindung zugrunde liegende Aufgabe wird damit vollkommen gelöst.

Indem nämlich im Gegensatz zu der bekannten Vorrichtung gemäß DE 94 02 931 auf eine Kontakttemperierung verzichtet wird, ist es nicht notwendig, die Temperiervorrichtung an die Formgebung des Kunststoff-Werkstücks anzupassen. Vielmehr wird in Anlehnung an die an sich aus der DE 195 36 868 A1 bekannte Konvektionskühlung eine Temperierwirkung an beliebig geformten Werkstücken möglich, wobei entscheidend hinzukommt, daß diese Temperierwirkung sich auch auf Komponenten des Formwerkzeugs erstrecken und einen Zeitraum vor, während und nach der Entnahme überstreichen kann. Dies ist mit den im Stand der Technik bekannten Vorrichtungen nicht möglich und durch diese auch nicht nahegelegt. Die Anordnung und Dimensionierung der Düsen kann so gewählt werden, daß eine effektive Temperierwirkung für das Werkstück und das Formwerkzeug bzw. Komponenten davon möglich wird, wobei diese in weiten Bereichen unterschiedliche Formen und Dimensionen aufweisen können.

Bei bevorzugten Ausgestaltungen der Erfindung kann das Temperiermedium Luft, im Falle einer Kühlung gekühlte Luft oder gar flüssige Luft sein. Auch die Verwendung einer Flüssigkeit, beispielsweise Wasser, ist möglich.

Bei einer ersten Gruppe von Ausführungsbeispielen der Erfindung sind die Düsen bei der Entnahme des Werkstücks auf das Werkstück gerichtet.

Diese Maßnahme hat den Vorteil, daß eine Temperierung des Werkstücks oder definierter Oberflächenbereiche des Werkstücks unmittelbar dann einsetzt, wenn sich das Handlingsystem dem Werkstück nähert. Die Temperierwirkung kann damit bereits dann beginnen, wenn überhaupt noch kein Entnahmevorgang begonnen hat. Die Temperierwirkung kann sich dann über den Entnahmevorgang selbst hinaus erstrecken und auch während der Ausfahrbewegung des Handlingsystems aus dem Zwischenraum zwischen den Werkzeughälften andauern, bis das Werkstück außerhalb des Formwerkzeugs an eine übliche Abfördereinrichtung oder Weiterverarbeitungseinrichtung übergeben wird.

Alternativ oder zusätzlich ist es hingegen in besonders bevorzugter Ausgestaltung der Erfindung bei anderen Varianten möglich, daß eine Temperierwirkung auf das Formwerkzeug bzw. Partien davon ausgeübt wird.

So ist bevorzugt, wenn der Kern im geschlossenen Zustand des Formwerkzeugs in den Formhohlraum hineinragt und bei geöffnetem Formwerkzeug frei liegt, wobei die Düsen bei der Entnahme des Werkstücks auf den Kern gerichtet sind.

Diese Maßnahme hat den ganz wesentlichen Vorteil, daß Komponenten des Formwerkzeugs, insbesondere also die erwähnten Kerne, ebenfalls bereits zu einem sehr frühen Zeitpunkt geheizt oder gekühlt werden können, nämlich dann, wenn das Handlingsystem in den Zwischenraum zwischen den Formhälften einfährt. Auch hier gilt, daß durch eine entsprechende Anzahl von Düsen, die Positionierung, Ausrichtung und Dimensionierung der Düsen in weiten Bereichen eine effektive Temperierwirkung für unterschiedlichste Komponenten des Formwerkzeugs, insbesondere also die erwähnten Kerne, eingestellt werden kann. Auch hier dauert die Temperierwirkung über den gesamten Entnahmevorgang aus dem Formhohlraum an und endet erst dann, wenn sich das Handlingsystem wieder aus dem geöffneten Formwerkzeug heraus bewegt.

Die vorstehenden Überlegungen gelten gleichermaßen für den Fall, daß eine Kühlwirkung, und den Fall, daß eine Heizwirkung ausgeübt wird.

Erfindungsgemäß läßt sich eine Kühlwirkung im Werkzeug mittels der beschriebenen Konvektionskühlung in vorteilhafter Weise an den Partien bzw. an den Komponenten des Werkzeugs erzielen, an denen man keine konventionellen Kühlkanäle verlegen kann. Dies gilt abgesehen von dem bereits erwähnten Fall der Kerne auch für solche Bereiche des Formwerkzeugs, in denen nur dünne Materialstärken vorliegen. Wenn z.B. der Formhohlraum über einen Anspritzkanal gespeist wird, in den ein Nadelventil integriert ist, so läuft das Material des Werkzeugs im Bereich des konischen Sitzes des Nadelventils unter Umständen sehr dünnwandig aus, wenn sich das Nadelventil unmittelbar im Übergang vom Angußkanal zum Formhohlraum befindet. Diese Stelle liegt bei geöffnetem Werkzeug auch frei, so daß sie mittels Konvektionskühlung durch gezieltes Anströmen mittels eines Kühlmediums gekühlt werden kann.

Andererseits kann es zweckmäßig sein, auf das Werkzeug bzw. auf Partien oder Komponenten davon eine Heizwirkung auszuüben.

Wenn z.B. beim Entformen des Werkzeugs die Kunststoffmasse im Bereich eines Angusses bereits erstarrt ist, so kann man durch gezieltes Aufheizen dieses Bereiches den Kunststoff wieder erweichen oder sogar verflüssigen. In entsprechender Weise können auch sogenannte "Fließbremsen" behoben werden. Hierunter versteht man solche Bereiche im Werkzeug, die den Fluß des geschmolzenen Kunststoffes beim Einspritzvorgang behindern. Dies ist z.B. an denjenigen Stellen des Werkzeugs der Fall, die sich auf zu niedriger Temperatur befinden, so daß das vorbeiströmende flüssige Kunststoffmaterial dort abgekühlt wird und damit an Viskosität zunimmt. Dasselbe gilt aber auch ganz allgemein für hydrodynamische Hindernisse, auf die die flüssige Kunststoffmasse beim Einspritzvorgang auf ihrem Weg durch das Werkzeug trifft. Wenn man am Ort eines derartigen hydrodynamischen Hindernisses eine gezielte Erhitzung vornimmt, so kann das Kunststoffmaterial dort lokal weiter angewärmt und damit zusätzlich in seiner Viskosität vermindert werden. Insbesondere gilt dies im Bereich von Kernen, wenn Kunststoffmaterial den Kern auf der einen Seite anströmt und sich der Fluß des Kunststoffmaterials um den Kern herum teilt, um dann stromabwärts des Kernes wieder zusammenzuströmen. Wenn das Kunststoffmaterial auf dem Weg um den Kern herum abkühlt, so kommt es stromabwärts des Kernes nicht mehr zu einem vollständigen Verschmelzen der beiden Teilströme, sondern es bildet sich vielmehr eine Naht, eine sogenannte "welding line". Auch hier ist es möglich, durch lokales Aufheizen des Werkzeugs Abhilfe zu schaffen.

Bei einer ersten Variante einer Maschine, bei der sowohl das Werkstück wie auch die Kerne temperiert werden, sind der Kern und die Düsen auf einer vom Werkstück abgewandten Seite des Handlingsystems angeordnet.

Bei der entsprechend anderen Variante sind hingegen der Kern und die Düsen auf einer dem Werkstück zu weisenden Seite des Handlingsystems angeordnet.

Mit diesen Varianten ist es möglich, alle vorkommenden Einsatzfälle abzudecken, wobei sich die Zweckmäßigkeit der einen oder der anderen Alternative daraus ergibt, wie im Einzelfall bei einem konkreten Werkzeug die Anordnung der Kerne im Formwerkzeug vorgesehen ist. Diese können nämlich in derjenigen Werkzeughälfte angeordnet sein, in der sich üblicherweise der Formhohlraum befindet, oder aber können von der gegenüberliegenden Werkzeughälfte in diesen hineinragen.

Schließlich ist ein Ausführungsbeispiel der Erfindung bevorzugt, bei dem das Handlingsystem einen im geöffneten Zustand des Formwerkzeugs zwischen die Werkzeughälften einfahrbaren Handlingarm umfaßt, wobei die Düsen am Handlingarm angeordnet sind.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Querschnittdarstellung eines Ausschnitts aus einem Formwerkzeug einer erfindungsgemäßen Kunststoff-Spritzgießmaschine, und zwar im geschlossenen Zustand des Formwerkzeugs;
- Fig. 2: eine Darstellung, ähnlich Fig. 1, jedoch für den geöffneten Zustand des Formwerkzeugs;
- Fig. 3: eine weitere Darstellung, ähnlich Fig. 1 und 2, zur Erläuterung des Entnahme- und Kühlvorganges in der erfindungsgemäßen Kunststoff-Spritzgießmaschine.

In den Figuren bezeichnet 10 insgesamt ein Formwerkzeug (ausschnittsweise), das im wesentlichen aus einer ersten Werkzeughälfte 12 und einer zweiten Werkzeughälfte 14 besteht. Es versteht sich jedoch, daß dies nur als Beispiel zu verstehen ist und die Erfindung selbstverständlich auch bei solchen Formwerkzeugen eingesetzt werden kann, die anders konfiguriert sind, beispielsweise als sogenannte Etagenwerkzeuge mit einem Mittelpaket und daran angesetzten seitlichen Werkzeugteilen.

In der ersten Werkzeughälfte 12 ist ein Formhohlraum 16 vorgesehen, in dem ein Werkstück 18 durch Einspritzen einer verflüssigten Kunststoffmasse erzeugt werden soll. Die Erzeugung und Zuführung der Kunststoffmasse in den Formhohlraum 16 ist in der Figur der Übersichtlichkeit halber nicht dargestellt. All dies ist im Stand der Technik bekannt und dem Fachmann geläufig.

Das Formwerkzeug 10 umfaßt ferner einen ersten Kern 20 sowie einen zweiten Kern 22. Die Kerne 20 und 22 sind in der zweiten Werkzeughälfte 14 geführt. Sie weisen vordere Enden 24 bzw. 26 auf, die bis in den Bereich des Formhohlraums 16, also in die erste Werkzeughälfte 12, hineinragen. Die Konfiguration beim ersten Kern 20 ist dabei derart, daß das vordere Ende 24 querschnittsvermindert ist, während der zweite Kern 22 über seine gesamte Länge, also bis zum vorderen Ende 26, denselben Querschnitt aufweist.

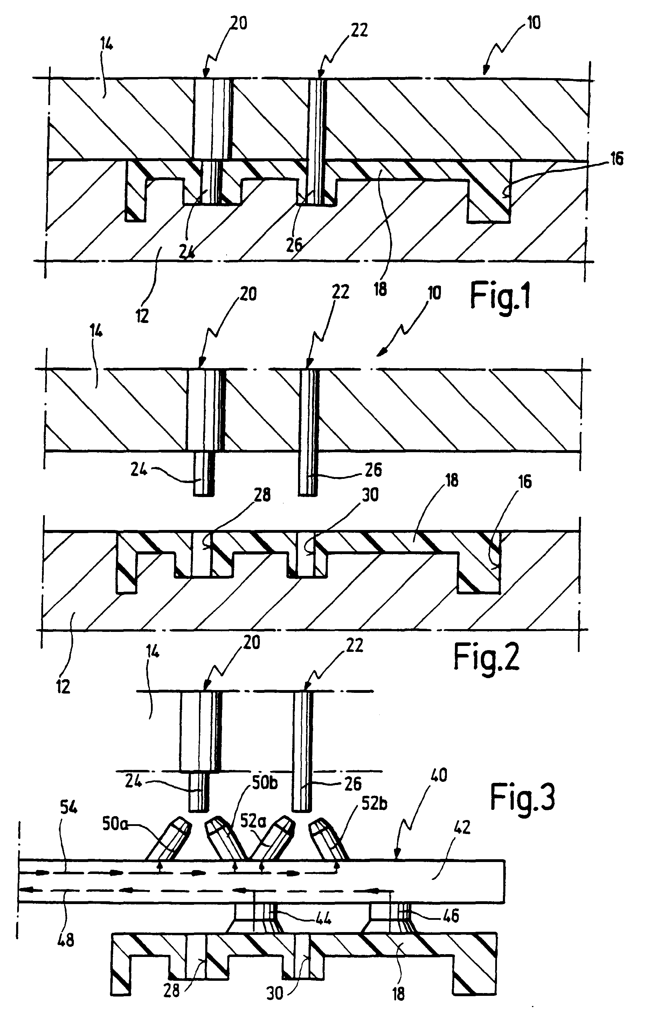

Wie man leicht aus Fig. 1 und 2 erkennt, dienen die vorderen Enden 24 und 26 dazu, im fertigen Werkstück 18 Durchgangsbohrungen 28 bzw. 30 zu bilden.

Auch hier gilt, daß die dargestellte Anordnung selbstverständlich nur beispielhaft zu verstehen ist. In dem in den Figuren dargestellten Beispiel ist es nämlich zweckmäßig, die Kerne 20, 22 in der zweiten Werkzeughälfte 14 anzuordnen und mit ihren vorderen Enden 24 und 26 in den Formhohlraum 16 in der ersten Werkzeughälfte 12 hineinragen zu lassen.

Bei anderen Anwendungsfällen, bei denen die Bohrungen im Werkstück quer zur Öffnungsrichtung des Formwerkzeugs verlaufen, können die Kerne auch in derselben Werkzeughälfte wie der Formhohlraum angeordnet sein, so daß sie in der Darstellung gemäß Fig. 1 und 2 horizontal verlaufen würden und damit in der ersten Werkzeughälfte 12 angeordnet und gelagert wären.

Fig. 3 zeigt nun den Zustand, in dem die beiden Werkzeughälften 12 und 14 im geöffneten Zustand des Formwerkzeugs 10 auseinander gefahren wurden.

Dabei können die Kerne 20, 22 ganz frei liegen, wie in Fig. 3 dargestellt; jedenfalls stehen ihre vorderen Enden 24 und 26 frei vor.

In den Zwischenraum zwischen den auseinander gefahrenen Werkzeughälften 12 und 14 wird nun ein Handlingsystem 40 eingefahren. Das Handlingsystem 40 ist am vorderen Ende als Handlingarm 42 mit entsprechend schmalen Abmessungen ausgebildet. An der in Fig. 3 unteren Seite des Handlingarms 42 befinden sich Greifelemente 44, 46, beispielsweise Sauger. Diese Greifelemente 44, 46 erfassen das Werkstück 18 und entnehmen dies aus dem Formhohlraum 16. Dabei können im Bereich des Formhohlraums 16 in an sich bekannter Weise Auswerferstifte vorgesehen sein (nicht dargestellt), wie dem Fachmann geläufig ist.

Wenn die Greifelemente 44, 46 als Sauger ausgebildet sind, kann in den Handlingarm 42 eine Unterdruckleitung 48 integriert sein, über die die Sauger mit entsprechendem Unterdruck versorgt werden.

Auf der in Fig. 3 oberen Seite des Handlingarms 42 befinden sich zwei Düsenpaare 50a, 50b sowie 52a, 52b. Das Düsenpaar 50a, 50b ist auf das frei liegende vordere Ende 24 des ersten Kerns 20 gerichtet, während das zweite Düsenpaar 52a, 52b das frei liegende vordere Ende 26 des zweiten Kerns 22 beaufschlagt. Die Düsenpaare 50a, 50b und 52a, 52b sind an einer Überdruckleitung 54 angeschlossen, die ebenfalls in den Handlingarm 42 integriert sein kann. Über die Überdruckleitung 54 wird den Düsenpaaren 50a, 50b und 52a, 52b ein Temperiermittel, z.B. ein Kühlmittel zugeführt. Das Kühlmittel kann Luft, gekühlte Luft, flüssige Luft, flüssiger Stickstoff oder eine andere Flüssigkeit sein.

Über die Düsen werden die vorderen Enden 24 und 26 mit Kühlmittel beaufschlagt und auf diese Weise durch Konvektionskühlung abgekühlt.

Falls sich die Kerne, wie bereits weiter oben angedeutet, ebenfalls in der ersten Werkzeughälfte 12 befinden sollten, wären die Düsenpaare an der Unterseite des Handlingarms 42 (in der Darstellung der Fig. 3) anzuordnen. Es können auch in weiterer Ausgestaltung der Erfindung Düsen vorgesehen sein, um das Werkstück 18 selbst zu kühlen, sei es insgesamt oder innerhalb definierter Oberflächenbereiche (nicht dargestellt).

Man kann daher durch eine entsprechende Anzahl, Ausrichtung und Dimensionierung von Düsen für ein Kühlmittel am Handlingsystem 40 bzw. am Handlingarm 42 eine gezielte Kühlwirkung für das Werkstück oder für Elemente des Formwerkzeugs erreichen. Diese Kühlwirkung kann unmittelbar dann einsetzen, wenn das Handlingsystem 40 in das geöffnete Formwerkzeug einfährt, beginnt also zum frühestmöglichen Zeitpunkt.

Das, was vorstehend für den Fall der Kühlung geschildert wurde, gilt sinngemäß gleichermaßen für den Fall einer Aufheizung durch Anströmen mittels eines Heizmediums.

Hier kommt in erster Linie eine lokale Aufheizung von Partien des Formwerkzeugs in Betracht. Man kann auf diese Weise bereits erstarrte Angußstellen wieder erweichen oder verflüssigen, und man kann, wie weiter oben ausführlich geschildert, auch spezielle Bereiche des Werkzeugs aufheizen, die ein Hindernis für den Fluß der Kunststoffmasse beim Einspritzvorgang darstellen.

## Patentansprüche

1. Temperierverfahren zum Einsatz bei einer Kunststoff-Spritzgießmaschine mit einem Handlingsystem (40) zur Entnahme eines Werkstücks (18) aus einem Formhohlraum (16) in einer Formhälfte (12, 14) eines Formwerkzeugs (10) und mit einer in das Handlingsystem (40) integrierten Temperiervorrichtung, dadurch gekennzeichnet, daß mittels der Temperiervorrichtung eine Heizwirkung erzielt wird.

2. Verfahren nach Anspruch 1, dadurch gekennzeichnet, daß die Heizwirkung auf das Formwerkzeug (10), insbesondere auf einen Bereich des Formwerkzeugs (10) ausgeübt wird, wobei vorzugsweise die Heizwirkung zum Wiedererwärmen eines erstarrten Angusses auf eine Mündung eines Angußkanals ausgeübt wird.

3. Verfahren nach Anspruch 2, bei dem das Formwerkzeug (10) mindestens einen Kern (20, 22) umfaßt und der Kern im geschlossenen Zustand des Formwerkzeugs in den Formhohlraum hineinragt und bei geöffnetem Formwerkzeug frei liegt, dadurch gekennzeichnet, daß die Heizwirkung auf den Kern (20, 22) oder auf ein hydrodynamisches Hindernis in einem Zuführkanal zum Formhohlraum ausgeübt wird.

4. Kunststoff-Spritzgießmaschine mit einem Handlingsystem (40) zur Entnahme eines Werkstücks (18) aus einem Formhohlraum (16) in einer Formhälfte (12, 14) eines Formwerkzeugs (10) und mit einer in das Handlingsystem (40) integrierten Temperiervorrichtung, dadurch gekennzeichnet, daß die Temperiervorrichtung als mindestes eine Düse (50, 52) für ein Temperiermedium ausgebildet ist.

5. Kunststoff-Spritzgießmaschine nach Anspruch 4, dadurch gekennzeichnet, daß das Temperiermedium Luft, insbesondere flüssige Luft, ist.

6. Kunststoff-Spritzgießmaschine nach Anspruch 4, dadurch gekennzeichnet, daß das Temperiermedium eine Flüssigkeit ist.

7. Kunststoff-Spritzgießmaschine nach einem oder mehreren der Ansprüche 4 bis 6, dadurch gekennzeichnet, daß das Temperiermedium ein Kühlmedium ist.

8. Kunststoff-Spritzgießmaschine nach einem oder mehreren der Ansprüche 4 bis 6, dadurch gekennzeichnet, daß das Temperiermedium ein Heizmedium ist.

9. Kunststoff-Spritzgießmaschine nach einem oder mehreren der Ansprüche 4 bis 8, dadurch gekennzeichnet, daß die Düsen bei der Entnahme des Werkstücks (18) auf das Werkstück (18) gerichtet sind.

10. Kunststoff-Spritzgießmaschine nach einem oder mehreren der Ansprüche 4 bis 9, dadurch gekennzeichnet, daß die Düsen bei der Entnahme des Werkstücks (18) auf das Formwerkzeug (10), insbesondere auf einen vorbestimmten Bereich des Formwerkzeugs (10) gerichtet sind.

11. Kunststoff-Spritzgießmaschine nach Anspruch 9, dadurch gekennzeichnet, daß das Formwerkzeug (10) mindestens einen Kern (20, 22) umfaßt, daß der Kern (20, 22) im geschlossenen Zustand des Formwerkzeugs (10) in den Formhohlraum (16) hineinragt und bei geöffnetem Formwerkzeug (10) frei liegt, und daß die Düsen (50, 52) bei der Entnahme des Werkstücks (18) auf den Kern (20, 22) gerichtet sind, wobei vorzugsweise der Kern (20, 22) und die Düsen (50, 52) auf einer vom Werkstück (18) abgewandten Seite des Handlingsystems (10) angeordnet sind.

12. Kunststoff-Spritzgießmaschine nach Anspruch 10 oder 11, dadurch gekennzeichnet, daß die Düsen auf einen Sitz eines zum Formhohlraum führenden Nadelventils gerichtet sind.

13. Kunststoff-Spritzgießmaschine nach einem oder mehreren der Ansprüche 4 bis 12, dadurch gekennzeichnet, daß das Handlingsystem (10) einen im geöffneten Zustand des Formwerkzeugs (10) zwischen die Werkzeughälften (12, 14) einfahrbaren Handlingarm (42) umfaßt, und daß die Düsen (50, 52) am Handlingarm (42) angeordnet sind.
